# EUROPEAN PATENT APPLICATION

(11) **EP 1 480 165 A2**
(43) Date of publication of application: **24.11.2004**
(21) Application number: 04012088.3
(22) Date of filing: 21.05.2004
(51) Int. Cl.: G06T 5/00

(54) **Image processing using image generation record information**

(30) Priority: 23.05.2003 JP 2003146135
(71) Applicant: SEIKO EPSON CORPORATION, Tokyo 160-0811 (JP)
(72) Inventor: Hayaishi, Ikuo, Shinjuku-ku Tokyo 163-0811 (JP)
(74) Representative: Winter, Brandl, Fürniss, Hübner, Röss, Kaiser, Polte Partnerschaft

(57) **Abstract**

The image processing device processes an image file that include image data generated by a flash-enabled image generating device. The image file includes flash use information that indicates whether or not the flash unit emitted light and return information that indicates whether or not, when light was emitted from the flash, such light was reflected back to the image generating device. Where the flash use information indicates that the flash unit emitted light and the return information indicates that the emitted light was not reflected back to the image generating device, the image data is corrected to a first brightness value that is brighter than the value used when the return information indicates that the emitted light was returned to the image generating device.

## Description

### BACKGROUND OF THE INVENTION

### Field of the Invention

The present invention relates to an image processing technology that uses image generation record information.

### Description of the Related Art

In the conventional art, several different image processes for correcting the brightness of image data taken by a digital still camera have been disclosed. For example, JP11-069372A discloses an image processing technology whereby a brightness histogram is created for the whole image and the brightness is corrected such that a prescribed percentage of pixels exhibit the maximum brightness value. JP2000-057335A discloses another technology whereby an image is divided into several regions, and a brightness histogram is created from the image regions, and brightness correction is performed for each separate image region via analysis.

In the conventional technologies described above, image processing is carried out irrespective of the user's wishes regarding an increase in image brightness.

### SUMMARY OF THE INVENTION

An object of the present invention is to provide a technology that allows the brightness of an image to be corrected properly when it can be inferred that the user's desire is to increase image brightness.

In one aspect of the present invention, there is provided a device for processing an image file that includes image data generated by an image generating device that incorporates a flash unit, wherein the image file includes return information that, when the flash unit has been used, indicates whether or not the light emitted therefrom has reflected off the photo subject and returned to the image generating device. The image processing device includes a brightness correction module that corrects the image data using different brightness correction amounts that differ depending on whether a first condition exists wherein the return information indicates that the emitted light did not return to the image generating device, or whether a second condition exists wherein the return information indicates that the emitted light returned to the image generating device.

According to this image processing device, because it can be determined from the return information whether or not the image data brightness is sufficient, the image brightness can be corrected properly depending on whether or not the light returned to the image generating device.

The present invention may be realized in various forms, and may be realized in such forms as an image processing device, an image processing method, a computer program for implementing the image processing method, a recording medium on which such computer program is recorded, and an image generation device comprising the image processing device.

### BRIEF DESCRIPTION OF THE DRAWINGS

Fig. 1 is a block diagram showing the configuration of an image processing device;

Fig. 2 shows the configuration of a image file;

Fig. 3 shows the tag numbers, tag names and descriptions used in the Exif file format;

Fig. 4 shows the details of flash information;

Fig. 5 shows a brightness correction curve in a first embodiment;

Fig. 6 shows the processing routine executed by the brightness correction module of the first embodiment;

Fig. 7 shows the brightness correction curve in a second embodiment;

Fig. 8 shows the processing routine executed by the brightness correction module of a second embodiment;

Fig. 9 shows the processing routine executed by the brightness correction module of a third embodiment;

### DESCRIPTION OF THE PREFERRED EMBODIMENT

Embodiments of the present invention will be described in the following order.
A. Device configuration
B. Image file structure
C. First embodiment
D. Second embodiment
E. Third embodiment
F. Fourth embodiment
G. Variations

A. Device configuration:

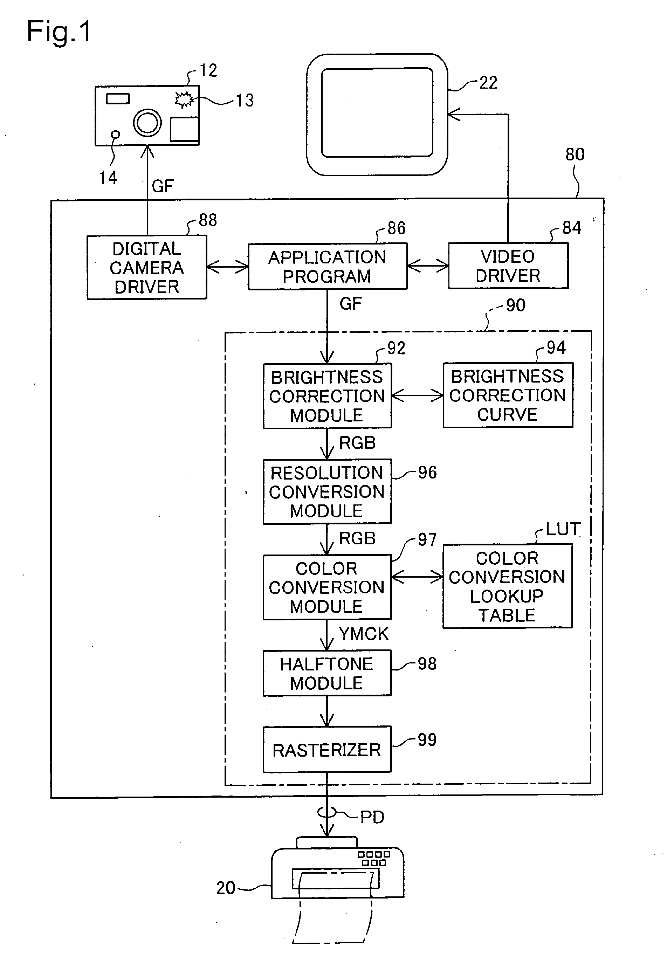

Fig. 1 is a block diagram showing the configuration of an image processing system embodying the present invention. This image processing system includes a computer 80 and a printer 20. The image processing system that includes the printer 20 and the computer 80 may be generally referred to as an 'image processing device' in a broader sense.

A digital still camera (hereinafter termed 'digicam') 12 includes a strobe 13 and a sensor 14. The sensor 14 detects whether or not the light emitted from the strobe 13 returned to the digicam 12 after reflecting off of the photo subject (i.e., whether or not return has occurred). The image generation record information that includes whether or not return has occurred is stored in the digicam 12 together with the image data generated thereby as a image file GF. The image file GF will be described below.

The image file GF generated by the digicam 12 is input to the computer 80 by an application program 86 via a digicam driver 88. The application program 86 performs desired processing of the image file GF input to the computer 80 and displays an image on a CRT 22 via a video driver 84. In addition, a print data file PD to be forwarded to the printer 20 is output via a printer driver 90 from the image file GF.

When the application program 86 issues a print command, the printer driver 90 of the computer 80 receives the image file GF from the application program 86 and converts it into print data PD to be supplied to the printer 20. The printer driver 90 includes a brightness correction module 92, a resolution conversion module 96, a color conversion module 97, a halftone module 98 and a rasterizer 99.

The brightness correction module 92 includes a brightness correction curve 94 with which the brightness value of the image data generated by the digicam 12 is corrected. The brightness correction module 92 converts the image data generated by the digicam 12 into image signals (RGB signals) having the desired brightness value with reference to the brightness correction curve 94. The operations performed by the brightness correction module 92 will be described below. The RGB signals obtained via the conversion are input to the resolution conversion module 96. The brightness correction module 92 may be incorporated in the application program 86.

The resolution conversion module 96 executes the function of converting the image data resolution into a printing resolution. The resolution-converted image data still constitutes image information comprising the three RGB color components, and becomes the input data for the color conversion module 97.

The color conversion module 97 includes a color conversion lookup table LUT that specifies the relationship between image information comprising the three RGB color components and ink amount information regarding the inks available in the printer 20. The color conversion module 97 converts the RGB image data for each pixel into multiple-tone ink amount data with reference to the color conversion lookup table LUT. For example, where the four ink colors of yellow (Y), cyan (C), magenta (M) and black (K) can be used by the printer 20, the RGB image data is converted into YMCK multiple-tone data. The YMCK multiple-tone data obtained via this color conversion becomes input data for the halftone module 98.

The YMCK multiple-tone data obtained via color conversion has 256 tones for each ink color, for example. The halftone module 98 executes so-called halftone processing for each ink color and generates halftone image data. This halftone image data is rearranged in order of data to be forwarded to the printer 20 by the rasterizer 99, and is output as final print data PD. The print data PD includes raster data indicating the state of dot formation during each main scan and data indicating the amount of sub-scanning to be performed.

The printer driver 90 is a program that performs the functions of executing various image processes and generating the print data PD. The program that performs the functions of the printer driver 90 may be provided over electric communication circuits or in the form of a recording on a computer-readable recording medium. The recording medium may comprise any of various types of computer-readable recording media, such as a flexible disk, CD-ROM, opto-magnetic disk, IC card, ROM cartridge, punch card, printed matter on which symbols such as a bar code are printed, an internal computer storage medium (memory such as a RAM or ROM) or an external storage medium.

B. Image file structure:

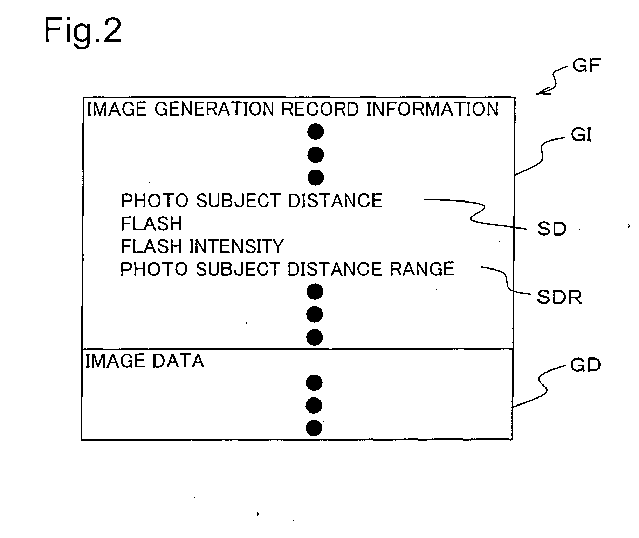

Fig. 2 shows the configuration of a image file GF. The digicam 12 can generate, in addition to image data GD representing the photo subject, image generation record information GI that includes various items of photo-taking information. For example, the digicam 12 can generate the subject distance SD indicating the distance in meters to the photo subject, flash intensity information that indicates the energy of the light emitted from the flash unit or the strobe 13, and the photo subject distance range SDR. The photo subject distance range SDR indicates the distance range to the photo subject, and may consist of a 'macro mode', 'close', 'far' or 'unknown' value.

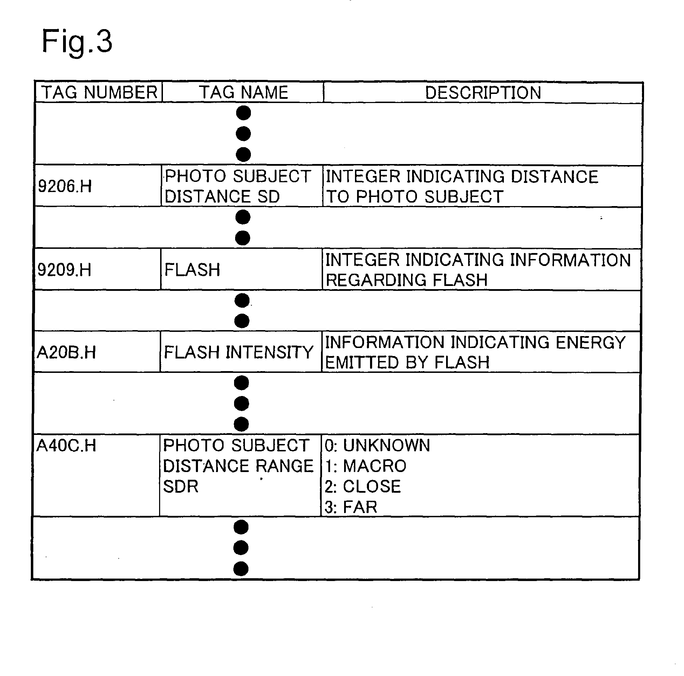

An example of the image generation record information GI is the digital still camera image file format standard Exif (hereinafter termed 'Exif') established by the Japan Electronic Industry Development Association. Fig. 3 is a table listing tag numbers, tag names, and tag meanings used by Exif format. A tag number is the number for a tag indicated by a tag name, and in Fig. 3, the mark '.H' is appended to indicate the hexadecimal numbering system. The 'photo subject distance SD' tag is an integer having a tag number of '9206.H' and indicating the distance to the photo subject, The 'flash' tag is an integer having a tag number of '9209.H' and indicating information regarding the flash unit, and the 'flash intensity' tag is an integer having a tag number of 'A20B.H' and indicating the intensity or energy of the flash light. The 'photo subject distance range SDR' tag has a tag number of 'A40C.H'. The 'photo subject distance range SDR' tag consists of photo subject distance category information. Where the digicam 12 is set to 'macro mode', the photo subject distance range SDR tag is '1', indicating the macro mode, where the photo subject distance is a close distance, such as 1 to 3 meters, the photo subject distance range SDR tag is '2', where the photo subject distance is a far distance, such as 3 meters or more, the photo subject distance range SDR tag is '3', and where the photo subject distance is unknown, the photo subject distance range SDR tag is '0'.

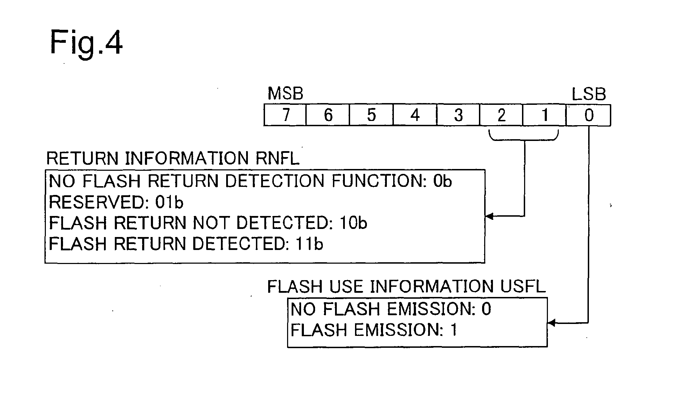

Fig. 4 shows detailed information regarding the 'flash' tag having a tag number of 9209.H. The numbers 0 through 7 indicate bit orders beginning with the least significant bit LSB, where 7 is the most significant bit MSB. The least significant bit LSB is used for flash use information USFL indicating whether or not the strobe 13 emitted light, and is '0' where the strobe 13 has not emitted light and '1' where the strobe 13 emitted light. Bits 2 and 3 are used for return information RNFL indicating whether or not the light emitted from the strobe 13 returned from the photo subject to the digicam 12. Where there is no function to detect the return of the light, the bit value is 00b, where such light detection function does exist but light return was not detected, the bit value is 10b, and where light return was detected, the value is 11b. Here, the 'b' is a letter indicating that the value is expressed in the binary number system, such that where the value is 10b, for example, bit 2 is '1' and bit 1 is '0'.

As described above, the image file GF generated by the digicam 12 can include photo subject distance SD or photo subject distance range SDR comprising distance information, flash use information USFL and return information RNFL. The brightness correction module 92 corrects the image data GD to a desired brightness using some of these items of information.

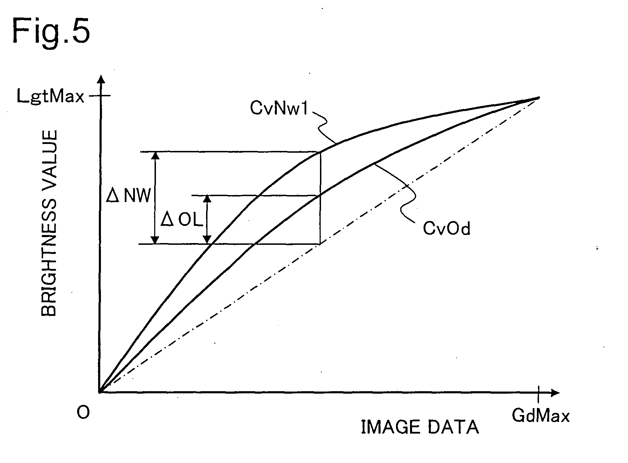

C. First embodiment:
The brightness correction module 92 (see Fig. 1) includes a brightness correction curve 94 that indicates the relationship between the image data GD value and the brightness value. Fig. 5 shows the brightness correction curve of the first embodiment. The horizontal axis represents the brightness value (each of RGB values) of the original image data GD, and the vertical axis represents the brightness value after correction. The chain-dot line in the drawing is a straight line connecting the origin with the point at which the image data GD value is at the maximum value GdMax and the brightness value is at the maximum value LgtMax. The curve CvOd indicates the relationship between the image data GD value and the brightness value when the return information RNFL indicates that the light emitted from the strobe 13 returned to the digicam 12. The difference between a given point on the chain-dot line in Fig. 5 to the point on the curve CVOd corresponding to the same image data GD value represents the correction amount ΔOL. Another curve CvNw1 indicates the relationship between the image data GD value and the brightness value when the flash use information USFL indicates that the strobe 13 emitted light and the return information RNFL indicates that the light emitted from the strobe 13 did not return to the digicam 12. The difference between a given point on the chain-dot line in Fig. 5 to the point on the curve CvNw1 corresponding to the same image data GD value represents the correction amount ΔNW. If the correction amount ΔNW is too large, the image becomes too bright, while if the correction amount ΔNW is too small, the image becomes too dark. Consequently, the correction amount ΔNW preferably falls within a range from 1.5 to 2.5 times the correction amount ΔOL, and in the first embodiment, the correction amount ΔNW is twice the correction amount ΔOL.

The reason that the correction amount ΔNW is larger than the correction amount ΔOL is that the subject of the image data has sufficient brightness when the return information RNFL indicates that the light from the strobe 13 returned to the digicam 12, while it lacks sufficient brightness when the flash use information USFL indicates that the strobe 13 emitted light and the return information RNFL indicates that the light from the strobe 13 did not return to the digicam 12. In the latter case, because the sensor 14 cannot detect light reflected from the photo object regardless of the user's desire to use the strobe 13 to increase the brightness, the image data GD is dark. Accordingly, when the flash use information USFL indicates that the strobe 13 emitted light and the return information RNFL indicates that the light from the strobe 13 did not return to the digicam 12, the correction amount ΔNW is increased. to be larger than the correction amount ΔOL in order to make the image data GD brighter. The correction amount ΔOL need not be a positive value, and may be zero. In other words, the image data GD may be used as the brightness value without correction when the return information RNFL indicates that that the light from the strobe 13 returned to the digicam 12.

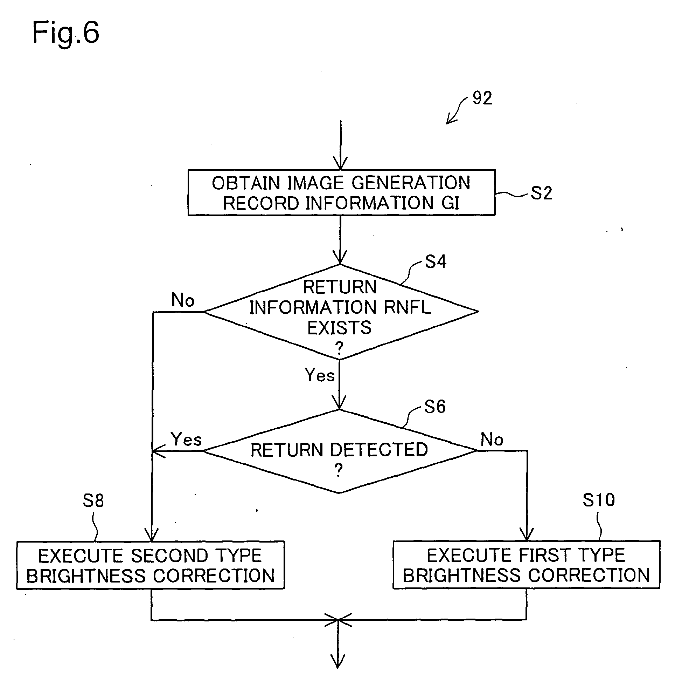

Fig. 6 shows the processing routine executed by the brightness correction module 92 of the first embodiment. In step S2, the image generation record information GI is obtained from the image file GF. In step S4, if there is no flash use information USFL, or if the flash use information USFL indicates that the strobe 13 was used and there is no return information RNFL, the brightness correction module 92 advances to step S8. In step S8, a second type brightness correction is carried out in order to obtain a brightness value using the curve CvOd described in connection with Fig. 5. On the other hand, if the flash use information USFL indicates that the strobe 13 was used and return information RNFL does exist, the brightness correction module 92 advances to step S6. In step S6, it is determined whether or not the return information RNFL indicates that the light emitted from the strobe 13 reflected off the photo subject and returned to the digicam 12. If the light from the strobe 13 returned to the digicam 12, the brightness correction module 92 advances to step S8. If the light from the strobe 13 did not return to the digicam 12, the brightness correction module 92 advances to step S10. In step S10, a first type brightness correction is carried out in order to obtain a brightness value using the curve CvNw described in connection with Fig. 5 in order to make the image data GD brighter.

Because the desire of the user to increase the brightness of the image data GD can be inferred from the value of the flash use information USFL and it can be determined from the return information RNFL whether or not the brightness of the image data GD is sufficient, as described above. If the image data GD is insufficiently bright, the image data GD is corrected to a higher brightness value in accordance with the curve CvNw1 in the brightness correction module 92.

D. Second embodiment:

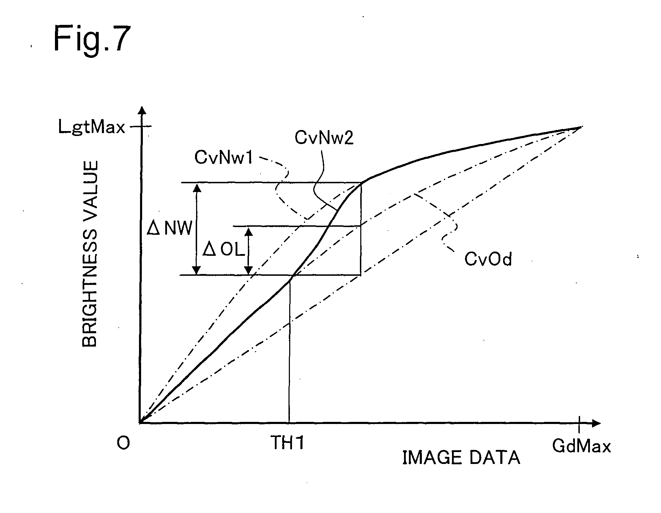

Fig. 7 shows a brightness correction curve of a second embodiment. The second embodiment is an example in which, when the image data GD value equals or exceeds a prescribed threshold value TH1, the value of the image data GD is corrected in accordance with the curve CvNw2 in order to make it brighter. Where the user uses the strobe 13, the purpose is to make the image data GD brighter, and it is often desired to increase the brightness of only the areas of the image data GD that are already brighter than other areas. For example, in an image of a human subject taken at night, it is often desired to increase the brightness of only the part of the image comprising the human subject.

Accordingly, if the flash use information USFL indicates that the strobe 13 was used and the return information RNFL indicates that the light from the strobe 13 did not return to the digicam 12, the brightness value for the image data GD is obtained in accordance with the curve CvNw2 shown in Fig. 7, while in all other cases, the brightness value is obtained in accordance with the curve CvOd.

Because in the second embodiment, the desire of the user to increase the brightness of the image data GD can be inferred from the value of the flash use information USFL and it can be determined from the return information RNFL whether or not the brightness of the image data GD is sufficient, as described above. If the image data GD is insufficiently bright, it is possible to increase in brightness only the brighter areas of the image data GD in accordance with the curve CvNw2 in the brightness correction module 92.

E. Third embodiment:

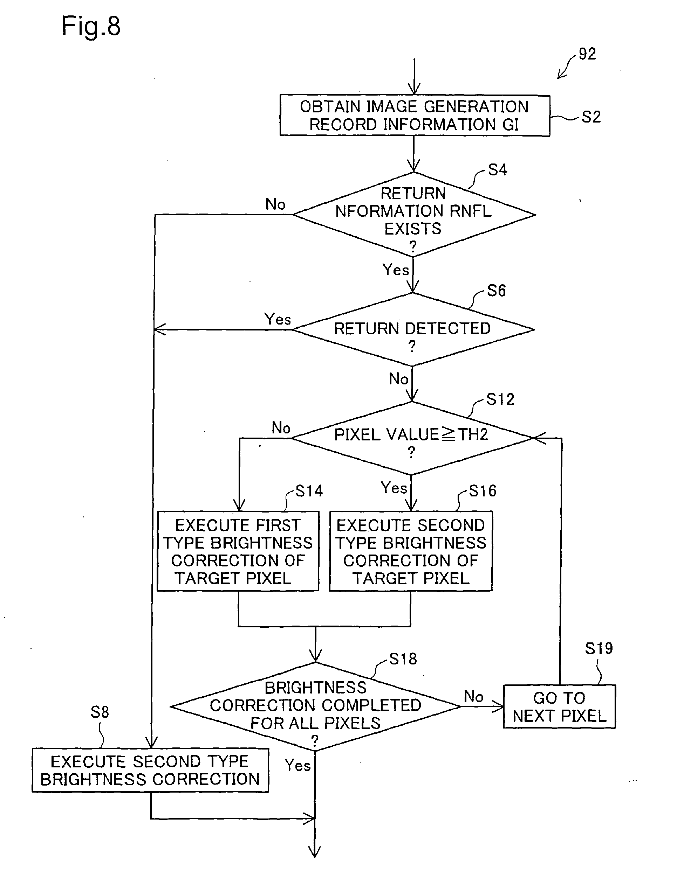

Fig. 8 shows the processing routine executed by the brightness correction module of a third embodiment. This embodiment differs from the first and second embodiments shown in Fig. 6 in regard to steps S12 through S19. These steps are executed for each pixel of the image data GD when the step S6 is negative. Step S12 pertains to the value of each pixel of the image data GD where the flash use information USFL indicates that the strobe 13 was used and the return information RNFL indicates that the light from the strobe 13 did not return to the digicam 12. It is determined whether or not the pixel value equals or exceeds a prescribed threshold value TH2. If the pixel value equals or exceeds the prescribed threshold value TH2, the image data GD is corrected to a brighter brightness value in step S14 in accordance with the curve CvNw1 shown in Fig. 5 or the curve CvNw2 shown in Fig. 7. If the pixel value is less than the prescribed threshold value TH2, the brightness value is obtained from the image data GD in step S16 in accordance with the curve CvOd shown in Fig. 5 or Fig. 7. In step S18, it is determined whether or not the brightness correction is completed for all pixels of the image data GD. If processing is not completed for all pixels, the next pixel is selected (step S19) and the brightness correction module 92 returns to step S12, but if processing is completed for all pixels, the routine executed by the brightness correction module 92 ends.

Because in the third embodiment, the desire of the user to increase the brightness of the image data GD can be inferred from the value of the flash use information USFL and it can be determined from the return information RNFL whether or not the brightness of the image data GD is sufficient, as described above. If the image data GD is insufficiently bright, it is possible to increase in brightness only the relatively bright areas of the image data GD in accordance with the curves CvNw1 or CvNw2.

F. Fourth embodiment:

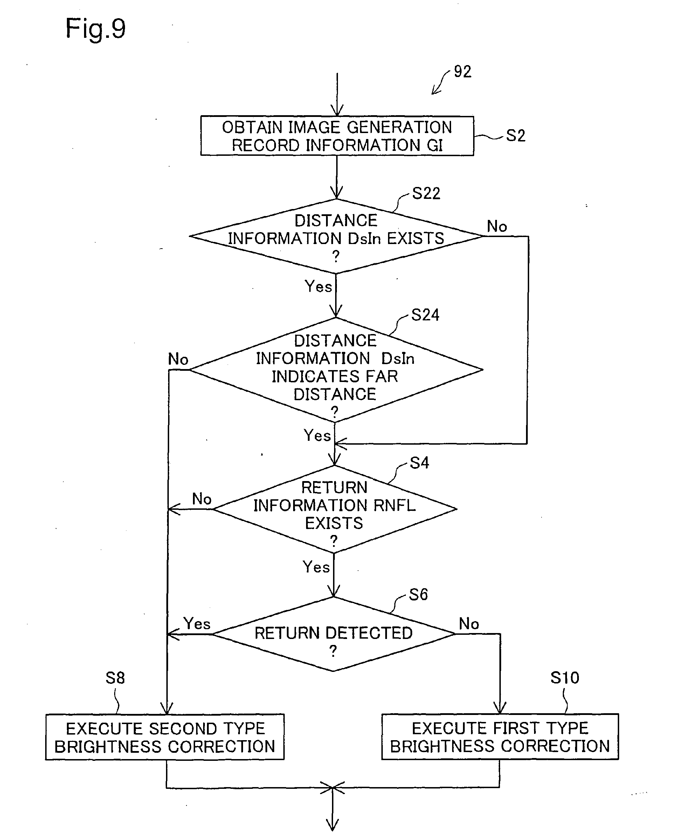

Fig. 9 shows the processing routine executed by the brightness correction module of a fourth embodiment. It differs from the routine shown in Fig. 6 in regard to steps S22 and S24. In step S22, it is determined whether or not distance information DsIn exists. The distance information DsIn will be described later. If no distance information DsIn exists, the brightness correction process advances to step S4. If distance information DsIn exists, it is determined in step S24 whether or not the value of the distance information DsIn equals or exceeds a prescribed value indicating a far distance. If the distance information DsIn does not indicate a far distance, the image data GD is corrected in accordance with the curve CvOd shown in Fig. 5 or Fig. 7. If the distance information DsIn does indicate a far distance, the brightness correction process advances to the steps including and subsequent to step S4. If the flash use information USFL indicates that the strobe 13 was used and the return information RNFL indicates that the light from the strobe 13 did not return to the digicam 12, the image data GD is corrected to a higher brightness value in step S10 in accordance with the curve CvNw1 shown in Fig. 5 or the curve CvNw2 shown in Fig. 7. The reason for making this determination from the flash use information USFL and the return information RNFL when the distance to the photo subject is a far distance as described above will be described below. Where the distance information DsIn indicates a far distance, even if the strobe 13 emits light, there is little chance that the light from the strobe 13 will return from the photo subject to the digicam 12. The user, however, would expect the light emitted from the strobe 13 to return. Accordingly, in this case as well, in order to satisfy the user's desire to increase the brightness of the image data GD, the above determination is made from the flash use information USFL and the return information RNFL when the distance to the photo subject is a far distance.

An example of the distance information DsIn is the photo subject distance SD and photo subject distance range SDR described in connection with Fig. 3. The photo subject distance SD is information expressing the distance to the photo subject in meters, and the photo subject distance range SDR is information expressing the distance to the photo subject in terms of 'close', 'far', 'macro' or 'unknown'. A distance information DsIn indicating a far distance means that the photo subject distance range SDR is 'far' (=3) or that the photo subject distance SD indicates a far distance that equals or exceeds a prescribed value. In the fourth embodiment, where the distance to the photo subject equals or exceeds three meters, the photo subject distance SD is deemed a 'far' distance. This is because the distance that is effectively covered by the strobe 13 integrated into the digicam 12 is generally around three meters or less. This distance is not limited to three meters, and it may be four meters or more if such distance is the distance at which the effect of the strobe 13 is lost. Furthermore, where a separate flash unit is used rather than the integrated strobe 13, the above distance may be the distance at which such separate flash unit is no longer effective, such as around 10 meters.

In the fourth embodiment, the user's desire to increase the brightness of the image data GD is checked using the value of the flash use information USFL when the distance information DsIn indicates that the distance to the photo subject is a far distance. In other words, if the distance information DsIn indicates that the distance to the photo subject is not a far distance, brightness correction identical to that performed where the strobe 13 light has reflected off of the photo subject and returned to the digicam 12 is carried out.

Because in the fourth embodiment, it is determined from the distance information DsIn that the distance to the photo subject is a far distance, the desire of the user to increase the brightness of the image data GD can be inferred from the value of the flash use information USFL, and it can be determined from the return information RNFL whether or not the brightness of the image data GD is sufficient. If the image data GD is insufficiently bright, the brightness thereof can be corrected to a higher brightness level in accordance with the curve CvNw1 or the curve CvNw2.

G. Variations:
The present invention is not limited to the embodiments and examples described above, and may be realized in various forms within the essential scope of the invention. For example, the following variations are possible.

G. Variation 1:
In the above embodiments, the image file GF was described as being based on the Exif file format standard, but so long as flash use information USFL indicating whether or not the strobe 13 was used and return information RNFL indicating whether or not the light from the strobe 13 returned from the photo subject to the digicam 12 are included, the effect obtained in the first through third embodiments may be realized even if the Exif file format is not used. In addition, so long as distance information DsIn indicating the distance to the photo subject exists, the effect obtained in the fourth embodiment may be realized even if the Exif file format is not used. For example, the TIFF/EP format used in some Kodak digital still cameras or the TIFF-FX format developed as a standard by Xerox may be used.

G2. Variation 2:
In the above embodiments, the image file included flash use information and return information, but it is acceptable if the image file has a configuration wherein flash use information is not included and return information is written to the image file only at the time of flash illumination. In this case, it can be determined based on the return information whether or not the flash light returned to the digicam, and the amount of image brightness correction can be adjusted accordingly.

In the present invention, the amount of brightness correction of the image differs depending on whether a first condition is present in which flash light did not return to the digicam or whether a second condition is present in which flash light returned. This configuration offers the advantage of enabling the image to be corrected to the proper brightness in accordance with the existence of flash light return.

G3. Variation 3:
In the above embodiments, processing was executed based on the image data GD prior to resolution conversion, but processing may instead be executed based on the image data after resolution conversion. However, executing processing based on the image data prior to resolution conversion offers the advantage of faster image processing because there is less data to be processed. Processing may be performed based on post-color conversion YMCK data.

G4. Variation 4:
In the above embodiments, the image data GD was obtained from a digital still camera, but the present invention is not limited to this implementation, and the image data GD may be input from a CD-ROM or other recording medium or over the Internet.

G5. Variation 5:
In the above embodiments, an image processing device and image processing method using a computer and printer was described as an example, but the present invention is not limited to this implementation, and may be realized in various other forms. For example, the image processing device of this invention may be realized as a facsimile machine, copier, line printer or page printer, and the present invention may be applied as the image processing method for these types of image processing device. Furthermore, the image processing method of the present invention may be realized via software or hardware. The present invention is also applicable to an image processing device provided in a camera or an image generation device.

## Claims

1. An image processing device for processing an image file that includes image data generated by an image generating device that incorporates a flash unit, wherein the image file includes return information that, when the flash unit has been used, indicates whether or not light emitted therefrom reflected off a photo subject and returned to the image generating device, the image processing device comprising:
a brightness corrector that corrects the image data using different brightness correction amounts that differ depending on whether a first condition exists wherein the return information indicates that the emitted light did not return to the image generating device, or whether a second condition exists wherein the return information indicates that the emitted light returned to the image generating device.

2. An image processing device according to Claim 1, wherein the image file further includes flash use information that indicates whether or not the flash unit emitted light, and
the brightness corrector determines that the first condition exists where the flash use information indicates that the flash unit emitted light and the return information indicates that the emitted light did not return to the image generating device, and determines that the second condition exists where the flash use information indicates that the flash unit emitted light and the return information indicates that the emitted light returned to the image generating device.

3. An image processing device according to Claim 1 or Claim 2, wherein the brightness corrector corrects the image data such that the image is brighter when the first condition is determined to be present than when the second condition is determined to be present.

4. An image processing device according to any of Claims 1 through 3, wherein the brightness corrector performs the correction such that the image is brighter when the first condition is determined to be present than when the second condition is determined to be present only for a pixel value of the image data that equals or exceeds a predetermined threshold value.

5. An image processing device according to any of Claims 1 through 4, wherein the image data further includes distance information indicating a distance to the photo subject, and
the brightness corrector performs the correction such that the image has the same brightness when the first condition is determined to be present as when the second condition is determined to be present where the distance information indicates that the photo subject is not located far away from the image generating device.

6. An image processing device according to any of Claims 1 through 5, wherein a brightness correction amount used by the brightness corrector when the first condition is present is ranges between 1.5 times and 2.5 times the brightness correction amount used when the second condition is present.

7. An image processing method for processing an image file that include image data generated by an image generating device that incorporates a flash unit, wherein the image file includes return information that, when the flash unit has been used, indicates whether or not light emitted therefrom reflected off a photo subject and returned to the image generating device, the image processing method comprising:
correcting the image data using different brightness correction amounts that differ depending on whether a first condition exists wherein the return information indicates that the emitted light did not return to the image generating device, or whether a second condition exists wherein the return information indicates that the emitted light returned to the image generating device.

8. A computer program product that enables a computer to be operated as an image processing device for processing an image file that include image data generated by an image generating device that incorporates a flash unit, wherein the image file includes return information that, when the flash unit has been used, indicates whether or not light emitted therefrom reflected off a photo subject and returned to the image generating device, the computer program product comprising:
a computer readable medium; and
a computer program stored on the computer readable medium, the computer program including:
a program for causing a computer to correct the image data using different brightness correction amounts that differ depending on whether a first condition exists wherein' the return information indicates that the emitted light did not return to the image generating device, or whether a second condition exists wherein the return information indicates that the emitted light returned to the image generating device.

9. An image generating device comprising:
a flush unit;
an image data generator that generates image data representing an image captured by the image generating device;
an image generation record information generator that generates image generation record information including return information that, when the flash unit has been used, indicates whether or not light emitted therefrom reflected off a photo subject and returned to the image generating device; and
a brightness corrector that corrects the image data using different brightness correction amounts that differ depending on whether a first condition exists wherein the return information indicates that the emitted light did not return to the image generating device, or whether a second condition exists wherein the return information indicates that the emitted light returned to the image generating device.
